# EUROPEAN PATENT APPLICATION

(11) **EP 2 813 336 A1**
(43) Date of publication of application: **17.12.2014**
(21) Application number: 13754551.3
(22) Date of filing: 23.01.2013
(51) Int. Cl.: B29B 13/02, B29C 35/02, B29K 21/00, B29L 30/00

(54) **METHOD FOR WARMING RUBBER, AND WARMING DEVICE**

(30) Priority: 28.02.2012 JP 2012042119
(71) Applicant: Sumitomo Rubber Industries, Ltd., Kobe-shi, Hyogo 651-0072 (JP)
(72) Inventor: OGATA, Kenichiro, Kobe-shi Hyogo 651-0072 (JP)
(74) Representative: Manitz, Finsterwald & Partner GbR
(86) International application number: PCT/JP2013/051287
(87) International publication number: WO 2013/128980

(57) **Abstract**

Provided are: a method for warming rubber, whereby the rubber temperature can be continuously measured in a short time, and a production condition of a calender roll can be automatically controlled so that the temperature of kneaded rubber compound is constant, the method for warming rubber including a warming step for warming kneaded rubber compound through use of a calender roll, a kneaded rubber compound temperature measurement step for measuring the temperature of kneaded rubber compound using a non-contacting thermometer, and a production condition adjusting step for automatically adjusting a production condition of the calender roll on the basis of the result of measurement by the non-contacting thermometer; and a rubber warming device for implementing the method for warming rubber.

## Description

### [TECHNICAL FIELD]

The present invention relates to a method for warming rubber and a warming device for warming a kneaded rubber compound by a calender roll.

### [BACKGROUND ART]

In the manufacturing process of a tire, warming of a kneaded rubber compound by a calender roll has been performed (for example, patent documents 1 and 2).

In the warming of the kneaded rubber compound, it is necessary to define production conditions of a calender roll in order to keep the temperature of the kneaded rubber compound constant.

However, since generation of heat from the kneaded rubber compound changes in response to the change of the outdoor temperature, even when the production conditions of a calender roll are the same, an uneven distribution of warming occurs.

Then, it is necessary to monitor the temperature of the kneaded rubber compound. Conventionally, a skilled worker touches the surface of the kneaded rubber compound under production by hand for monitoring the temperature. A method has been adopted wherein the production conditions of a calender roll are adjusted based on the temperature the worker sensed.

### [PRIOR ART DOCUMENTS]

### [PATENT DOCUMENTS]

[Patent Document 1] JP2008-137361A
[Patent Document 2] JP11-34096A

### [SUMMARY OF THE INVENTION]

### [PROBLEM TO BE SOLVED BY THE INVENTION]

However, in the case of the above-mentioned method, since works of the method are performed by a worker's intuition or experience, an exact temperature of the rubber under production cannot be grasped. For this reason, a trouble burning rubber by excessive warming occurs, and the burnt rubber is processed as a scrap. A rubber getting insufficient warming causes a perforate trouble in a next step, and the rubber in which the abnormalities in thickness, an appearance defect, etc. have been caused by the perforate trouble is processed as a scrap. There has been a problem that considerable time would be required until the worker gains experience and masters the work.

Then, a method has been proposed that a part of kneaded rubber compound under production is sampled, a temperature of this sample is measured with a contact-type thermometer, and a production condition of a calender roll is adjusted based on the measured result.

In the case of this method, although it is not necessary to depend on a worker's intuition or experience, extraction of a sample is needed, temperature monitoring time also needs about 5 minutes per one monitoring, and the measured value is changed by the differences in the sampling position, the measured region of the sample, and the time after cutting out the sample of rubber until it is measured. Accordingly, when this method is used, the rubber temperature cannot be measured stably in a short time, and it was difficult to keep the temperature of the kneaded rubber compound constant by always monitoring while measuring rubber temperature continuously.

Then, considering the above situation, a subject of the present invention is to provide a method for warming rubber and a warming device which can control the production conditions of a calender roll automatically so that the rubber temperature can be kept constant by always monitoring while measuring rubber temperature continuously in a short time.

### [MEANS FOR SOLVING THE PROBLEM]

The invention according to claim 1 is a method for warming rubber comprising:
a warming step of warming a kneaded rubber compound with a calender roll,
a measuring step a kneaded rubber compound temperature by measuring a temperature of the kneaded rubber compound with a non-contact thermometer, and
an adjustment step of production conditions by adjusting production conditions of the calender roll automatically based on a measured result with the non-contact thermometer.

a The invention according to claim 2 is a method for warming rubber according to claim 1 comprising:
a cutting step for cutting said kneaded rubber compound to which warming has been applied into a predetermined width, and
the temperature of a vicinity of middle part in a direction of thickness of a cut face of the cut kneaded rubber compound is measured in said measuring step of a kneaded rubber compound temperature.

The invention according to claim 3 is a warming device of rubber comprising:
a calender roll which performs warming of a kneaded rubber compound,
a non-contact thermometer which measures the temperature of the kneaded rubber compound, and
a control means which adjusts production conditions of the calender roll automatically based on a measured result with the non-contact thermometer.

The invention according to claim 4 is a warming device of rubber according to claim 3 comprising:
a cutting means of cutting a kneaded rubber compound to which warming has been applied into a predetermined width, and
said non-contact thermometer which is set up for measuring the temperature of a vicinity of middle part in the thickness direction of a cut face of said cut kneaded rubber compound.

### [EFFECT OF THE INVENTION]

According to the present invention, a method for warming rubber and a warming device of rubber which can control the production conditions of a calender roll automatically so that the rubber temperature can be kept constant are provided by always monitoring a rubber temperature while measuring the rubber temperature continuously in a short time.

### [BRIEF DESCRIPTION OF DRAWINGS]

[Fig. 1] Figure 1 is a schematic view which shows the warming device of rubber according to an embodiment of the present invention.
[Fig. 2] Figure 2 is a schematic view which shows the rubber temperature monitoring position with a non-contact thermometer in the warming device of rubber according to an embodiment of the present invention.
[Fig. 3] Figure 3 is a schematic view which illustrates the measuring method of Example and Comparative examples.

### [EMBODIMENT FOR CARRYING OUT THE INVENTION]

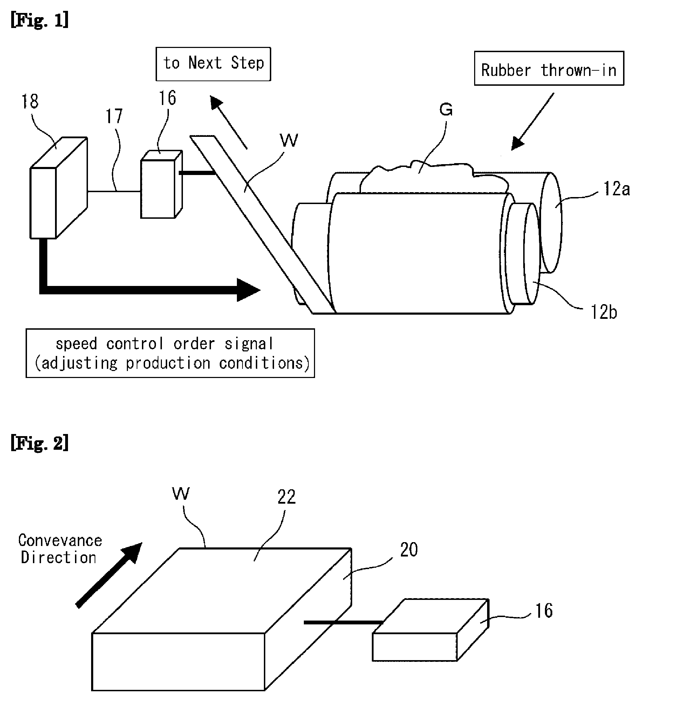

Figure 1 is a schematic view which shows the warming device of rubber according to the present embodiment, and Figure 2 is a schematic view which shows the rubber temperature monitor position with a non-contact thermometer in the warming device of rubber according to the present embodiment.

### 1. Warming Device of Rubber

### (1) The whole constitution

As shown in Figure 1, the warming device of rubber according to the present embodiment provides a pair of calender rolls 12a and 12b which perform a warming processing of a kneaded rubber compound, a cutting equipment (illustration abbreviated) which has a cutter, a non-contact thermometer 16, and a control means (PC) 18 which controls the revolving speed etc. of calender rolls 12a and 12b.

### (2) Calender roll

A pair of calender rolls 12a and 12b, in which a heater is stored in the inside of the roll, performs warming on a kneaded rubber compound materials G thrown-in, and roll the kneaded rubber compound materials G into the predetermined thickness.

### (3) Cutting equipment

A cutting equipment is arranged near the pair of calender rolls 12a and 12b, and cuts into predetermined width the kneaded rubber compound which has been warmed and rolled. A belt-shaped kneaded rubber compound W cut by the cutting equipment is conveyed towards an extruder.

### (4) Non-contact thermometer

A non-contact thermometer 16 is allocated in the conveyance lower stream of the pair of calender rolls 12a and 12b, and measures the temperature of the belt-shaped kneaded rubber compound W continuously in a short time.

As shown in Figure 2, a setup of position, height, etc. is performed so that the non-contact thermometer 16 can measure the vicinity of middle part in a thickness direction of a cut face 20 which is a side surface of the belt-shaped kneaded rubber compound W.

### (5) Control means

A control means 18 is connected to the non-contact thermometer 16 via a signal wire 17, and based on the monitored value of the kneaded rubber compound temperature acquired from the non-contact thermometer 16, the production conditions for warming of calender rolls 12a and 12b, i.e., a revolving speed of calender rolls 12a and 12b, etc., is adjusted automatically.

The control means 18 memorizes a setting value of the kneaded rubber compound temperature, and compares the setting value of the kneaded rubber compound temperature with the monitored value of the kneaded rubber compound temperature acquired from the non-contact thermometer 16. And when it judges that the monitored value of the kneaded rubber compound temperature is higher than the setting value of the kneaded rubber compound temperature, it adjusts the production conditions of the calender rolls 12a and 12b so as to repress the warming of the kneaded rubber compound materials G. On the other hand, when it judges that the monitored value of the kneaded rubber compound temperature is lower than the setting value of the kneaded rubber compound temperature, it adjusts the production conditions of the calender rolls 12a and 12b so as to increase the warming of the kneaded rubber compound materials G.

### 2. A method for warming rubber

Next, the method for warming rubber using the above-mentioned warming device of rubber is explained. This method for warming rubber comprises a warming step, a cutting step, a temperature monitoring step of the kneaded rubber compound, and an adjusting step of the production conditions.

### (1) Warming step

In this step, the kneaded rubber compound materials G are preheated, further kneaded and plasticized, and then supplied to a pair of calender rolls 12a and 12b. Thereby, warming of the kneaded rubber compound is performed by the calender rolls 12a and 12b, and the kneaded rubber compound is rolled into the desired thickness.

### (2) Cutting step

In this step, after the rolled kneaded rubber compound is cut by the cutting equipment and is formed into a belt-shaped kneaded rubber compound W, it is conveyed towards an extruder.

### (3) Monitoring step of kneaded rubber compound temperature

In this step, a temperature of a vicinity of middle part in the thickness direction of a cut face 20 of the belt-shaped kneaded rubber compound W is measured with the non-contact thermometer 16 during conveyance of the belt-shaped kneaded rubber compound W. Thereby, a measured result equivalent to the case where the internal temperature of the belt-shaped kneaded rubber compound W is measured can be obtained. And the monitoring value of the kneaded rubber compound temperature measured with the non-contact thermometer 16 is sent to the control means 18 via the signal wire 17.

### (4) Adjustment step of the production conditions

In this step, the production condition of the calender rolls 12a and 12b is automatically adjusted as mentioned above by comparing the setting value of the kneaded rubber compound temperature to the monitoring value of the kneaded rubber compound temperature measured with the non-contact thermometer 16.

### 3. Effect of the embodiments

(1) Since the non-contact thermometer 16 is used as a temperature measurement means of the belt-shaped kneaded rubber compound W, sampling can get unnecessary, thus, the temperature of the belt-shaped kneaded rubber compound W can be measured continuously in a short time, and the temperature can be monitored in real time. For this reason, the variation in the amount of warming can be suppressed, and the production conditions of the calender rolls 12a and 12b can be automatically controlled so that the kneaded rubber compound temperature is kept constant.
(2) Since the vicinity of middle part in the thickness direction of the cut face 20 of the belt-shaped kneaded rubber compound W is measured with the non-contact thermometer 16, generation of the variation in the measured value by measuring the surface portion of the belt-shaped kneaded rubber compound W can be suppressed, the same test result as measurement of the internal temperature of the belt-shaped kneaded rubber compound W can be obtained. Thus, the production conditions of the calender rolls 12a and 12b can be adjusted exactly.
(3) Since the setting value of the kneaded rubber compound temperature is compared to the monitored value of the kneaded rubber compound temperature acquired from the non-contact thermometer 16 and the production conditions of the calender rolls 12a and 12b is adjusted, the variation in the amount of warming by the variation in workers, outdoor temperature or rubber physical properties can be suppressed, thus, the kneaded rubber compound temperature can be kept constant.
(4) The trouble which rubber may burn by too excessive warming can be prevented, and the yield can be raised. A fault of a perforate trouble and the like in the next step by the shortage of warming can be prevented.

### [EXAMPLES]

### 1. Example and Comparative Example

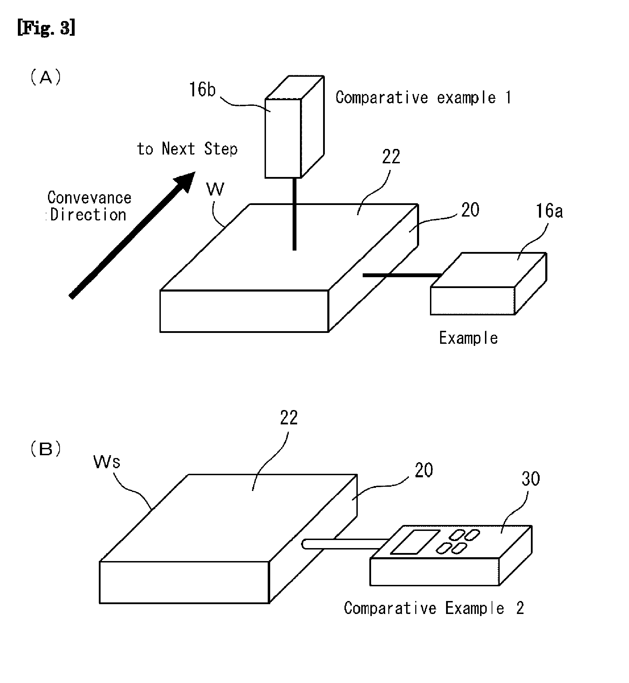

Figure 3 is a schematic view illustrating a measuring method of Example and Comparative examples, wherein Figure (A) is a drawing which shows a measuring method of the Example and the Comparative example 1, and Figure (B) is a drawing which shows a measuring method of the Comparative example 2.

This Example is an example in which the measurement was performed at vicinity of middle part in the thickness direction of the cut face 20 of the belt-shaped kneaded rubber compound W using a non-contact thermometer 16a as shown in Figure 3 (A), wherein the kneaded rubber compound was warmed based on the method for warming rubber according to the above-mentioned embodiment.

The Comparative example 1 is an example in which the temperature of a surface 22 of the warmed belt-shaped kneaded rubber compound W was measured with a non-contact thermometer 16b, as shown in Figure 3 (A). The Comparative example 2 is an example in which a part of the warmed belt-shaped kneaded rubber compound W was sampled and measured at the vicinity of middle part in the thickness direction of the cut face 20 of sample Wₛ with a contact type thermometer 30, as shown in Figure 3 (B).

### 2. Measurement Conditions and Assessment in Example and Comparative Examples

Warming of the kneaded rubber compound of the Example and the Comparative examples were performed according to each of the above-mentioned methods using a calender roll manufactured by Nakata Machine Manufacturing Inc. Ltd., having a roll specification of ϕ660.4 mm in diameter and 2133.6 mm in width of a front roll, and ϕ 660.4 mm in diameter and 2133.6 mm in width of a back roll. A kneaded rubber compound temperature was set at 85°C, and the production conditions of the calender roll were adjusted automatically. The results of 5 times Experiments are shown in Table 1.

**[Table 1]**

| | Example | Comparative example 1 | Comparative example 2 |
|---|---|---|---|
| Results of temperature measurements (°C) | 84.4 | 75.7 | 85.6 |
| | 85.4 | 83.5 | 84.9 |
| | 83.9 | 76.6 | 87.2 |
| | 86.5 | 75.6 | 86.1 |
| | 84.3 | 82.1 | 82.5 |
| Measured values (mean values) (°C) | 84.9 | 78.7 | 85.2 |

From Table 1, it is understood that there is little variation in the amount of warming in the cases of the Example and the Comparative example 2, since there is little dispersion in the temperature measurement values compared to the case of the comparative example 1.

Comparing the Example and the Comparative example 2, the Example is advantageous in respect of workability, since in the case of Comparative example 2, sampling of the kneaded rubber compound is required and the measuring time is longer than that of the Example.

As mentioned above, it is understood that the Example is advantageous not only in respect of workability but also in respect of a small variation in the amount of warming.

As mentioned above, although the present invention has been explained based on the embodiments, the present invention is not limited to the above-mentioned embodiments. Various change can be added to the above-mentioned embodiments within the limit of the same and equivalent scope to the above-mentioned embodiments.

### [DESCRIPTION OF THE REFERENCE SIGNS]

- 12a, 12b: calender roll
- 16, 16a, 16b: non-contact thermometer
- 17: signal wire
- 18: control mean
- 20: cut face of the belt-shaped kneaded rubber compound
- 22: surface of the belt-shaped kneaded rubber compound
- 30: contact type thermometer
- G: kneaded rubber compound material
- W: belt-shaped kneaded rubber compound
- Ws: sample

## Claims

1. A method for warming rubber comprising:
a warming step of warming a kneaded rubber compound with a calender roll,
a measuring step a kneaded rubber compound temperature by measuring a temperature of the kneaded rubber compound with a non-contact thermometer, and
an adjustment step of production conditions by adjusting production conditions of the calender roll automatically based on a measured result with the non-contact thermometer.

2. A method for warming rubber according to claim 1 comprising:
a cutting step for cutting said kneaded rubber compound, to which warming has been applied, into a predetermined width, and
the temperature of a vicinity of middle part in a direction of thickness of a cut face of the cut kneaded rubber compound is measured in said measuring step of a kneaded rubber compound temperature.

3. A warming device of rubber comprising:
a calender roll which performs warming of a kneaded rubber compound,
a non-contact thermometer which measures the temperature of the kneaded rubber compound, and
a control means which adjusts production conditions of the calender roll automatically based on a measured result with the non-contact thermometer.

4. A warming device of rubber according to claim 3 comprising:
a cutting means of cutting a kneaded rubber compound to which warming has been applied into a predetermined width, and
said non-contact thermometer which is set up for measuring the temperature of a vicinity of middle part in the thickness direction of a cut face of said cut kneaded rubber compound.
